(19) Europäisches Patentamt
European Patent Office
Office européen des brevets

(11) Publication number: **0 135 167**
**B1**

(12) # EUROPEAN PATENT SPECIFICATION

(45) Date of publication of patent specification: **06.07.88**

(51) Int. Cl.$^4$: **C 08 L 25/00**, C 08 L 53/02

(21) Application number: **84109939.3**

(22) Date of filing: **21.08.84**

(54) **Alkenyl aromatic resinous polymers and blends with alkenyl aromatic diene block copolymers.**

(30) Priority: **22.08.83 US 525337**

(43) Date of publication of application:
**27.03.85 Bulletin 85/13**

(45) Publication of the grant of the patent:
**06.07.88 Bulletin 88/27**

(84) Designated Contracting States:
**BE DE FR GB IT NL SE**

(56) References cited:
**EP-A-0 079 964**
**FR-A-2 263 277**

(73) Proprietor: **THE DOW CHEMICAL COMPANY**
**2030 Dow Center Abbott Road P.O. Box 1967**
**Midland, MI 48640 (US)**

(72) Inventor: **Bredeweg, Corwin J.**
**5709 Leeway Drive**
**Midland Michigan 48640 (US)**

(74) Representative: **Hann, Michael, Dr. et al**
**Patentanwälte Dr. Michael Hann Dr. H.-G.**
**Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 135 167 B1

**Description**

Alkenyl aromatic resins have found wide applications in commerce, particularly for injection molding and extrusion into shaped bodies for, film. However, such resins are often rigid and brittle, a problem overcome to some degree by the addition of diene polymers such as synthetic and natural rubbers.

Polymer blends of alkenyl aromatic resins and diene polymers have been prepared by a variety of methods including mechanical blending, by polymerization of the alkenyl aromatic monomer in the presence of the diene rubber, and emulsion polymerization. Blends or mixtures of alkenyl aromatic resinous polymers and diene polymers generally exhibit reduced tensile strength over that of the alkenyl aromatic resin alone. However, their toughness or resistance to impact is generally substantially increased. The level of diene polymer employed therein is approximately 5 weight percent to 25 weight percent of the total mixture.

Many block copolymers have been prepared of the configuration $AB(BA)_n$ wherein n is 0 to 5 inclusive, A is a block of alkenyl aromatic monomer, and B is a block of a polymer of one or more conjugated dienes. The transition from the A block to the B block may be abrupt or may constitute a polymer of gradually changing composition wherein the A block adjacent to the B block may continuously vary in composition from a copolymer relatively high in alkenyl aromatic monomer to a copolymer of high diene content. Such polymers are generally referred to as graded or tapered block copolymers. Block copolymers may vary in physical characteristics from a thermoplastic elastomer to a relatively rigid resinous material depending upon the proportion of the diene monomer polymerized therein.

A wide variety of toughened alkenyl aromatic resinous compositions have been prepared by incorporating block copolymers primarily of the AB or ABA configuration into a matrix of an alkenyl aromatic resinous polymer. Such polymer blends may be prepared by a variety of methods including the polymerization of the alkenyl aromatic monomer in the presence of the block copolymer in suspension or by mechanical blending of such polymers. Generally, such block copolymers are more readily dispersed in the alkenyl aromatic resinous matrix than are homopolymers of the diene. Some alkenyl aromatic resinous polymers reinforced with a block copolymer of alkenyl aromatic monomer and a diene monomer have been prepared wherein the dispersion of the block copolymer is such that films and thin sheets of the resultant polymer blend are, for practical purposes, transparent.

For many applications such alkenyl aromatic resinous polymer-diene polymer blends including graft copolymers have been prepared to obtain a maximum balance of functional physical properties including high tensile strength and excellent physical toughness. In the preparation of most blends, as the diene content of the blend is increased, the toughness also increases but the tensile strength is significantly decreased. The desired physical properties in any such diene polymer reinforced-alkenyl aromatic resinous composition will vary depending upon the end use. For example, a combination of high toughness and stiffness is desirable in a machine housing such as a radio cabinet or calculator housing and transparency is not a problem. However, in other applications, the resinous composition should be transparent or translucent and also tough, particularly for packaging and display uses.

Because of the widely varying requirements of tough impact resistance resinous products, it would be desirable if such compositions could be prepared without special polymerization techniques to have a relatively high level of toughness with a minimal quantity of a diene component and also increased light transmission properties.

These advantages are achieved in a polymer blend consisting of: (a) 5 to 95 parts by weight of a polymer containing polymerized therein at least 95 weight percent of one or more alkenyl aromatic monomers of the formula:

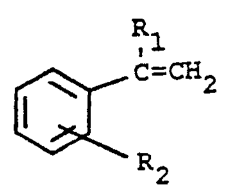

Formula I

wherein each $R_1$ is and $R_2$ is independently hydrogen or methyl, and up to 5 weight percent of another monomer polymerizable therewith, and (b) 95 to 5 parts by weight of a blend of at least 2 block copolymers of the configuration $AB(BA)_n$ wherein n is an integer from 1 to 5, A is a polymer of an alkenyl aromatic monomer of Formula I, B is a block polymer of one or more conjugated dienes, said blend being a mixture of at least 2 such block copolymer and including at least one block copolymer containing less than 40 weight percent of diene monomer polymerized therein and at least one block copolymers containing greater than 50 weight percent of the diene monomer polymerized therein with the limitation that the weight ratio of the low diene block copolymer to the high diene block copolymer is 1:2 to 4:1 and the total diene content of the polymer blend is 5 to 35 weight percent. These polymer blends exhibit improved resistance to impact and, in the absence of pigment, improved light transmission characteristics.

Preferred are polymer blends as described above wherein the ratio of styrene to α-methylstyrene in (a) is greater than 1:2.5.

Alkenyl aromatic resinous polymers useful for the practice of the present invention are readily prepared by well known methods. They include polymers of monomers of the Formula I, either alone or in admixture with up to 5 weight percent of one or more monomers copolymerizable therewith. Such monomers include styrene, α-methylstyrene, paramethylstyrene, and paramethyl-α-methylstyrene. Polymerization is readily accomplished by mass, suspension, emulsion or solution techniques, utilizing thermal, free radical or anionic initiation.

The polymers should have a weight average molecular weight determined by gel permeation chromatography of 25,000 to 400,000 and beneficially from 70,000 to 350,000. Polymers in the lower molecular weight range and below, exhibit a highly desirable fluidity on being heat plastified. However, they are of relatively low impact and tensile strength and tend to be brittle. Polymers in excess of about 400,000 grams per mole molecular weight average often exhibit an undesirably high viscosity when heat plastified.

Block copolymers for the practice of the present invention are most readily prepared by anionic polymerization as typified in U.S. Patents: 2,975,160; 3,390,207; 3,632,682; 4,196,153; 4,205,016; and 4,219,627. Such methods include the sequential polymerization of the block copolymer employing a monofunctional catalyst for example, n-butyllithium, wherein either the A or B block may be polymerized in the absence of other reactive monomers. When the polymerization of one block is generally complete, monomer for the second block is added to form a block of AB configuration terminated by a lithium atom. Subsequent additions monomer will serve to increase the length of one block or provide a block of different composition depending upon the monomer. Different block copolymers can be prepared by initiating polymerization in the presence of both a diene monomer and an alkenyl aromatic monomer wherein the more reactive diene monomer polymerizes first giving an initial block consisting of a majority of conjugated diene units polymerized therein. As the concentration of diene monomer decreases, increasing proportions of the alkenyl aromatic monomer are incorporated within the molecule. When the diene monomer is gone, the proportion of alkenyl aromatic monomer polymerized in the block increases and provides a homopolymer or diene free alkenyl aromatic block.

Employing a difunctional initiator, the diene component may be first polymerized to provide diene polymer having two living ends. Then alkenyl aromatic monomer may be added to form terminal blocks of the A configuration.

Alternatively living polymers of AB configuration are prepared having, for example, a lithium atom terminating the B block remote from the A block, and then contacted with a multifunctional coupling agent such as carbon tetrachloride. With carbon tetrachloride the resulting product generally is a so-called star block copolymer of the formula $AB(BA)_n$ wherein n is 3. Depending on the coupling agent, n is readily varied between integral values from 1 to 5.

Beneficially in the A block the weight ratio of isopropenyl aromatic monomer to alkenyl aromatic monomer varies from 1:99 to 99:1 and preferably from 30:70 to 71:29. Block copolymers useful in the practice of the present invention have weight average molecular weights as determined by gel permeation chromatography of from 40,000 to 800,000 and beneficially from 60,000 to 300,000. The weight ratio of A:B portions of the block copolymer is from 5:95 to 95:5.

Blends in accordance with the present invention are readily prepared employing any conventional method including the mechanical admixture of the heat plastified blend components. The mechanical admixture may be accomplished by screw extruders, compounding rolls and other similar malaxating devices. Blending can also be achieved using solution blending techniques with an inert solvent.

In the preparation of impact resistant compositions which do not require high light transmission characteristics, blending is sufficient when the block copolymers are dispersed to provide diene polymer domains of up to 3 to 5 micrometers in mean diameter. If a relatively high degree of transparency, is desired, the diene-polymer domains should preferably have mean diameters of 0.1 micrometer or less.

*Preparation*

Three copolymers designated as A, B and U were prepared employing the following procedure: A 114 l. (30 gal.) reactor was charged with α-methylstyrene purified by passing through a column of activated alumina. The α-methylstyrene within the reactor was deoxygenated at 30°C by applying vacuum and the impurities inactivated (blanked) with 1.7886 N n-butyllithium solution. Oxygen-free styrene was then added and the mixture heated to 60°C. A desired quantity of sec-butyllithium in cyclohexane was added for initiation. After 10 minutes, the temperature of the reaction mixture had risen to 80°C. About 20 minutes after the reaction mixture had reached 80°C, the reaction was terminated by the addition of isopropyl alcohol. A quantity of octyldecyl-3-(3′,5′)di-tertiarybutyl-4′-hydroxyphenylpropionate commercially available under the trade designation of Irganox 1076 was added to the polymer syrup in a quantity sufficient to give a concentration of 0.2 weight percent based on weight of polymer. The polymer syrup was concentrated to about 38 weight percent solids by a vacuum distillation. It was further devolatilized by placing in a tray in a vacuum oven at about 180°C for 45 minutes after the polymer reached a temperature of 170°C. The resultant polymer slabs were then ground for subsequent evaluation. The proportions employed for the preparation of A, B and U are set forth in the following Table I.

TABLE I

| | A | B | U |
|---|---|---|---|
| Kilograms of α-methylstyrene charged to reactor | 71.9 | 72.4 | 72.1 |
| Quant. of n-butyllithium used for blanking (1.7886N solution) | 101 g<br>129.6 ml<br>231.9 mmole | 13 g<br>16.7 ml<br>29.9 mmole | 65 g<br>83.4 ml<br>149.2 mmole |
| Kilograms styrene added | 3.62 | 3.61 | 3.68 |
| Quant. of sec-butyllithium used for initiation (0.8989N solution) | 54 g<br>69.3 ml<br>62.3 mmole | 57 g<br>73.0 ml<br>65.8 mmole | 75 g<br>96.6 ml<br>86.5 mmole |
| Quant. of iso-propyl alcohol used for termination in milliliters | 6 | 7 | 7 |
| Weight percent solids in polymer syrup | 10.0 | 10.8 | 10.2 |

*Synthesis of Copolymer C*

Copolymer C was prepared in the following manner: 52.51 kg of α-methylstyrene which had been passed through an activated alumina bed were charged to a 114 l. (30 gal.) reactor. The α-methylstyrene was deoxygenated at about 30°C using vacuum, and impurities inactivated by the addition of 22.3 ml of a 1.4379 N solution of sec-butyllithium in cyclohexane. About 3.35 kg of uninhibited oxygen-free styrene were then added to the reactor and the solution heated to 60°C. Polymerization was initiated by the addition of 50.8 ml of a 1.4379 N solution of sec-butyllithium in cyclohexane. In about 10 minutes, the polymer solution temperature increased to 88°C: It was cooled to about 60°C. By analysis, it contained about 11.8 weight percent polymer solids.

About 30 minutes after the initial addition of sec-butyllithium, 3.15 kg of oxygen-free styrene was added followed by an additional 38 ml of 1.4379 N sec-butyllithium in cyclohexane. When polymerization appeared to be terminated, the solution within the reactor contained 21.6 percent by weight solids. A third polymerization was initiated after the addition of 2.95 kg of oxygen-free styrene by the further addition of 30 ml of 1.4379 N sec-butyllithium in cyclohexane. When the additional polymerization was complete, the solution within the reactor contained about 29.9 weight percent solids. A fourth polymerization step was conducted by the addition of 2.77 kg of oxygen-free styrene. Polymerization was initiated by the addition of 37.8 ml of 1.4379 N sec-butyllithium solution in cyclohexane. Upon the apparent completion of polymerization, the weight percent of solids of the reactor content was 37.0 weight percent. When the polymerization was apparently complete, an additional 2.6 kg of oxygen-free styrene were added followed by 28.0 ml of 1.4379 N sec-butyllithium solution in cyclohexane. On the apparent completion of the fifth polymerization step, the reactor contents were 43.0 weight percent solids.

Polymerization was terminated and the polymer inactivated by the addition of 25.8 ml of isopropyl alcohol and 235 g of carbon dioxide over about 2 hours. Sufficient Irganox® 1076 antioxidant was added to provide 0.2 weight percent based on polymer solids and the polymer was recovered from the syrup by devolatilization in a vacuum oven at 180°C for 45 minutes after the polymer reached 170°C. The cooled polymer slabs so obtained were ground and set aside for further evaluation.

*Synthesis of Copolymer E*

A polymer hereinafter designated as copolymer E was prepared in the following manner:

A 114 l. (30 gal.) reactor was charged with 32.78 kg of α-methylstyrene purified by passing through an activated alumina bed. The reactor and contents were deoxygenated at about 30°C by application of vacuum and impurities inactivated by the addition of 12 ml of 1.7944 N sec-butyllithium in cyclohexane. Then 2.01 kg of uninhibited oxygen-free styrene was added and the resultant solution heated to 60°C.

Polymerization was initiated by the addition of 27 ml of 1.7944 N sec-butyllithium in cyclohexane. Within about 10 minutes, the temperature of the reaction mixture increased to 80°C. The polymer solution was cooled to about 60°C and 1.37 kg removed for analysis (10.7 weight percent polymer solids).

About 90 minutes after first initiation an additional quantity of 1.66 kg of purified oxygen-free styrene were added followed by 10.3 ml of 1.7944 N sec-butyllithium in cyclohexane. Polymerization appeared to be complete after 20 minutes. A 0.94 kg sample was removed and analyzed (19.6 weight percent solids). The reaction mixture was cooled to 60°C and 1.54 kg of inhibitor-free deoxygenated styrene added with 14.1 ml of 1.7944 N sec-butyllithium in cyclohexane. After 20 minutes, polymerization again appeared to be complete. A sample (0.90 kg), analyzed for 27.1 weight percent solids. The contents of the reactor were cooled to 60°C and a further polymerization initiated by the addition of 1.43 kg of inhibitor-free deoxygenated styrene followed by 15.4 ml of 1.7944 N sec-butyllithium in cyclohexane were added to the reactor. After 20 minutes, polymerization appeared to have ceased and a 0.70 kg sample was removed and analyzed for a solids content of 33.6 weight percent. The contents of the reactor were cooled to 60°C, and an additional 1.34 kg of inhibitor-free deoxygenated styrene and 10.3 ml of 1.7944 N sec-butyllithium in cyclohexane added.

Polymerization appeared to be complete or terminated after 20 minutes and 12 ml of isopropyl alcohol were added to inactivate any living polymer. The solids content was 38.9 weight percent. 0.2 weight percent of the phenolic antioxidant was added based on polymer solids and the reaction mixture devolatilized by heating in a vacuum oven at 180°C for 45 minutes after the polymer reached 170°C. The resultant polymer was ground into granules for further evaluation.

Physical properties of copolymer A, B, C, E and U are set forth in Table II.

TABLE II
Copolymer Description

| | Mol. wt. | Melt Flow Rate Schedule I | Ratio α-MeS/S* |
|---|---|---|---|
| A | 165,000 | 1.0 | 48/52 |
| B | 138,000 | 2.4 | 45/55 |
| C | 106,000 | 4.1 | 48/52 |
| E | 155,000 | 1.0 | 48/52 |
| U | 96,000 | 6.8 | 50/50 |

* Weight ratio of α-methylstyrene to styrene as determined by nuclear magnetic resonance.

*Synthesis of Elastomeric Triblock Polymer D*

A 114 l. (30 gal.) reactor was charged with 56.16 kg of α-methylstyrene purified by passing through an activated alumina bed. The α-methylstyrene was deoxygenated at about 30°C in vacuum and impurities inactivated by the addition of 19 ml of 1.4795 N sec-butyllithium solution in cyclohexane. To the reactor were added 1.56 kg of uninhibited oxygen-free styrene and 7.94 kg of butadiene. Prior to the additïon to the reactor, the butadiene was purified by passing through an ion exchange bed of commercially available ion exchange material sold under the trade designation of DOWEX® MSC-1 ($K^+$ form) and a bed of activated alumina. Active hydrogen compounds were inactivated by the addition of 26.4 ml of 1.4795 N sec-butyllithium in cyclohexane. After inactivation of the impurities, the reaction mixture was heated to 40°C and 210 millimoles of 1,3-phenylene-bis-(3-methyl-1-phenyl-pentylidene)bis(lithium), 0.10 millimole per gram of solution in toluene was added. The bis lithium compound was prepared employing the procedures of U.S. Patent 4,196,154. After 1.5 hours, the reaction mixture reached a temperature of 109°C and 19.4 ml of isopropyl alcohol were added to terminate the reaction. A 2.37 kg sample was removed and the solids content determined (17.5 weight percent). The remaining reaction mixture was cooled to of 40°C and 6.54 kg of purified butadiene and 1.44 kg of purified styrene were added followed by 151 millimoles of the bis lithium initiator. After an hour, the reaction mixture reached a temperature of 108°C and was deactivated by the addition of 23 ml of isopropyl alcohol.

The resultant polymer syrup containing 28.3 weight percent solids was stabilized by the addition of 0.25 weight percent based on solids of Irganox 1076 plus 2 weight percent of 2,6-di-tert-butyl-4-methylphenol commercially available under the trade designation of Ionol. Also added was 1 weight percent based on the weight of polymer solids of tris-nonylphenyl phosphite. The polymer was recovered by devolatilizing in a vacuum oven at 170°C for 45 minutes after the polymer reached 160°C. The resultant polymer was used for further evaluation.

*Synthesis of Elastomeric Triblock Polymers P and R*

The procedure of polymer D was repeated except that 100 g of carbon dioxide was added to the reactor prior to the addition of the stabilizers.

*Synthesis of Elastomeric Triblock Polymer Q*

The procedure employed for the preparation of polymer D was employed except that only one polymerization step was employed.

The procedure for the preparation of polymers D, P, R and Q is summarized in Table III while physical properties are set forth in Table IV.

TABLE III

| | Triblock Polymer | | | |
|---|---|---|---|---|
| | D | P | R | Q |
| *1st Polymerization* | | | | |
| Kilograms of α-methylstyrene added to reactor | 56.16 | 40.76 | 40.12 | 63.85 |
| Quantity of sec-butyllithium for removing impurities | 19 ml (28 mmole) 1.4795 N | 38.2 ml (56.6 mmole) 1.4795 N | 21.1 ml (31.2 mmole) 1.4786 N | none |
| Kilograms styrene added | 1.56 | 1.36 | 1.16 | 2.54 |
| Kilograms butadiene added | 7.94 | 4.45 | 5.13 | 6.66 |
| Quantity of sec-butyllithium for removing impurities | 26.4 ml (39 mmole) 1.4795 N | none | none | none |
| Quantity of difunctional initiator for 1st initiation | 210 mmole 0.10 mmole per gram of solution | 135 mmole 0.10 mmole per gram of solution | 101 mmole 0.10 mmole per gram of solution | 149 mmole 0.138 mmole per gram of solution |
| Milliliters isopropyl alcohol added after 1st polymerization | 19.4 | 12.0 | 10.0 | 25.0 |
| Kilograms polymer syrup removed | 2.37 | 1.70 | none | — |
| % solids in polymer syrup | 17.5 | 15.7 | 18.2 | 15.8 |

TABLE III continued

| | Triblock Polymer | | | |
|---|---|---|---|---|
| | D | P | R | Q |
| *2nd Polymerization* | | | | |
| Kilograms butadiene added | 6.54 | 3.83 | 6.24 | — |
| Kilograms styrene added | 1.44 | 1.23 | 1.19 | — |
| Quantity of difunctional initiator for 2nd initiation | 151 mmole 0.10 mmole per gram of solution | 106 mmole 0.10 mmole per gram of solution | 104 mmole 0.10 mmole per gram of solution | — |
| Milliliter isopropyl alcohol added after 2nd polymerization | 23.0 | 16.0 | 21.0 | — |
| % solids in final polymer syrup | 28.3 | 27.5 | 33.0 | 15.8 |
| % Irganox 1076 | 0.25 | 0.25 | 0.25 | none |
| % Ionol | 2.0 | 2.0 | 2.0 | 1.0 |
| % TNPP | 1.0 | 1.0 | 1.0 | 1.0 |

TABLE IV
Triblock Polymer Description

| | Mol. wt. | Melt Flow Rate Schedule G | % Butadiene | Ratio α-MeS/S |
|---|---|---|---|---|
| D | 84,000 | 14.9 | 63.5 | 62/38 |
| P | 78,000 | 8.3 | 58.1 | 58/42 |
| Q | 103,000 | 0.8 | 50.5 | 57/43 |
| R | 133,000 | 0.8 | 61.7 | 67/33 |

*Synthesis of Non-Elastomeric Triblock Polymer V*

A 114 l. (30 gal.) reactor was charged with 30.20 kg of alumina purified α-methylstyrene. The α-methylstyrene was deoxygenated at 30°C employing a vacuum and active hydrogen impurities inactivated by the addition of 6 ml of 1.5063 N sec-butyllithium solution in cyclohexane. Then 1.98 kg of oxygen-free uninhibited styrene plus 1.30 kg of butadiene purified by passing through an ion exchange bed and activated alumina were added. Active hydrogen impurities introduced with the styrene and butadiene were inactivated by addition of 29 ml of 1.5063 N sec-butyllithium in cyclohexane. The reaction mixture within the reactor was heated to 50°C and 101 millimoles of the bislithium compound employed in the synthesis of triblock polymer D were added to initiate polymerization. After 90 minutes, polymerization appeared to be complete. The reactor contents were heated at 70°C for 30 minutes and cooled to 25°C. A 5.28 kg sample of polymer syrup was removed and found to contain 14.9 weight percent solids.

A second polymerization step was conducted by the addition of 1.38 kg of purified styrene and 0.84 kg of purified butadiene. Contents of the reactor were heated to 50°C and 27 millimoles of the bislithium initiator added. After 4 hours, the polymerization appeared to be complete. The contents of the reactor were heated at 70° for about 30 minutes and then cooled to about 25°C. A 3 kg sample of the reaction mixture was removed and determined to contain 28.5 percent polymer solids.

A third polymerization step was initiated employing 1.16 kg of purified styrene and 0.73 kg of purified butadiene. The reaction mixture was heated to 50°C and 28.7 millimoles of the bislithium initiator were added. Polymerization appeared to be complete after 3 hours. The reactor contents were heated at 70°C for about 30 minutes, cooled to about 25°C and a polymer syrup containing 37.1 percent by weight of polymer solids obtained. The reaction mixture was terminated by the addition of 6 ml of isopropyl alcohol and the following stabilizers were added: 1 weight percent tris-nonylphenylphosphite (TNPP), 2 weight percent 2,6-di-tert-butyl-4-methylphenol (Ionol), 0.25 weight percent of Irganox 1076, the percentages being based on polymer solids. The mixture was then devolatilized in a vacuum oven at a temperature of 180°C for 45 minutes after the polymer temperature reached 170°C. The resultant polymer was cooled and ground to granules for further evaluation.

*Synthesis of Non-Elastomeric Triblock Polymers L, M, N and O*

Block polymers, L, M, N and O were prepared employing the procedure generally equivalent to the preparation of Polymer V. Quantities utilized in the preparation of Polymers V, L, M, N and O are set forth in Table V. Typical polymer properties are given in Table VI.

TABLE V

Triblock Polymer

| | V | L | M | O | N |
|---|---|---|---|---|---|
| *1st Polymerization* | | | | | |
| Kg α-MeS added to reactor | 30.20 | 44.17 | 40.07 | 43.23 | 76.74 |
| Quantity of sec-butyl-lithium for removing impurities | 6.0 ml (1.5063 N) | 51.0 ml (1.7944 N) | 67.0 ml (1.7944 N) | 22.8 ml (1.4733 N) | none |
| Kg styrene added | 1.98 | 3.08 | 2.79 | 2.27 | 3.58 |
| Kg butadiene added | 1.30 | 2.17 | 1.21 | 2.40 | 2.35 |
| Quantity of sec-butyl-lithium for remaining impurities | 29.0 ml (1.5063 N) | none | none | none | none |
| Quantity of difunctional initiator 1st initiation | 101 mmole[a] | 163 mmole[a] | 138 mmole[a] | 88.7 mmole[a] | 187.2 mmole[a] |
| Ml isopropyl alcohol added after 1st polymerization | none | none | none | 9.9 | 15 |
| Kg polymer syrup removed | 5.28 | 5.50 | 5.33 | 6.29 | 6.35 |
| % solids in polymer | 14.9 | 15.9 | 14.0 | 13.9 | 11.4 |

[a] Concentration = 0.10 mmole/gram solution

TABLE V continued

Triblock Polymer

| | V | L | M | O | N |
|---|---|---|---|---|---|
| *2nd Polymerization* | | | | | |
| Kg butadiene added | 0.84 | 0.77 | 1.00 | 1.85 | 2.46 |
| Kg styrene added | 1.38 | 0.97 | 2.35 | 1.88 | 3.95 |
| Quantity of difunctional initiator for 2nd initiation | 27 mmole[a] | 19.3 mmole[a] | 49.0 mmole[a] | 49.2 mmole[a] | 96 mmole[a] |
| Ml isopropyl alcohol added after 2nd polymerisation | none | none | none | 5.0 | 12 |
| Kg polymer syrup removed | 3.00 | 1.30 | 2.50 | 3.31 | 6.10 |
| % solids in polymer syrup | 28.5 | 23.2 | 25.8 | 25.1 | 22.9 |

[a] Concentration = 0.10 mmole/gram solution.

TABLE V continued

Triblock Polymer

| | V | L | M | O | N |
|---|---|---|---|---|---|
| *3rd Polymerization* | | | | | |
| Kg butadiene added | 0.73 | 1.74 | 0.61 | 1.62 | 2.47 |
| Kg styrene added | 1.16 | 2.58 | 1.59 | 1.66 | 3.79 |
| Quantity of difunctional initiator for 3rd initiation | 28.7 mmole[a] | 82 mmole[a] | 44 mmole[a] | 99.0 mmole[a] | 120 mmole[a] |
| Ml isopropyl alcohol added after 3rd polymerization | 6 | 43 | 38 | 16 | 20 |
| % solids in polymer syrup | 37.1 | 33.8 | 33.7 | 32.0 | 32.4 |
| % Irganox 1076 | 0.25 | 0.25 | 0.25 | 0.25 | 0.25 |
| % Ionol | 2.0 | 2.0 | 2.0 | 2.0 | 2.0 |
| % TNPP | 1.0 | 1.0 | 1.0 | 1.0 | 1.0 |

[a] Concentration = 0.10 mmole/gram solution.

TABLE VI
Triblock Polymer Description

| | Mol. Weight | Melt Flow Rate Schedule I* | % Butadiene | Ratio α-methylstyrene/ styrene |
|---|---|---|---|---|
| (L) | 79,000 | 14 | 29.9 | 48/52 |
| (M) | 78,000 | 15 | 18.0 | 50/50 |
| (N) | 108,000 | 5.8 | 25.3 | 47/53 |
| (O) | 120,000 | 1.4 | 34.2 | 49/51 |
| (V) | 94,000 | 7.0 | 23.0 | 50/50 |

* Schedule I — ASTM D—1238

*Preparation of Diblock Polymer S*

A 114 l. (30 gal.) reactor was charged with 38 kg of α-methylstyrene purified by passing through a bed of activated alumina. Oxygen was removed from the α-methylstyrene within the kettle by heating the monomer to 30°C and applying a reduced pressure. Polymerization retarding impurities were neutralized by addition of 28.7 ml of 1.781 N solution of n-butyllithium in cyclohexane. The reactor was further charged with 2.52 kg of oxygen-free uninhibited styrene and 1.65 kg of butadiene purified by passing through a bed of ion exchange beads commercially available as Dowex MSC-1 in potassium form, and then a bed of activated alumina. The reactor was heated to 50°C and polymerization initiated by the addition of 44.5 g of a 1.781 N n-butyllithium solution in cyclohexane. After 30 minutes, polymerization of the styrene and butadiene was complete and 8 ml of isopropyl alcohol was added to terminate any living polymers present. The reaction mixture contained 16.2 weight percent of solids based on the weight of the polymer. 2 weight percent of Ionol and 1 weight percent of tris-nonylphenylphosphite was added. The solution was concentrated under reduced pressure at 80°C to 28 weight percent solids and then dried in a vacuum oven at 180°C for 45 minutes after the polymer reached 170°C.

*Preparation of Diblock Polymer T*

Block polymer designated as Polymer T was prepared by a procedure similar to that described for Polymer S. Quantities employed in the preparation of Polymers S and Polymers T are set forth in Table VII.

TABLE VII

| | Polymer S | Polymer T |
|---|---|---|
| Wt. α-methylstyrene added to reactor | 38.0 kg | 31.4 kg |
| Quantity of n-butyllithium for removing impurities | 28.7 ml (1.781 N) | 10.8 ml (1.4654 N) (s-BuLi) |
| Wt. Styrene added | 2.52 kg | 2.02 kg |
| Wt. Butadiene added | 1.65 kg | 1.57 kg |
| Amount of Initiator | 57.1 ml (1.781 N) n-BuLi | 68.0 ml (1.4654 N) s-BuLi |
| Ml Isopropyl Alcohol added | 8 | 8 |
| % Solids in final polymer syrup | 16.2 | 15.9 |
| % Ionol | 2.0 | 2.0 |
| % TNPP | 1.0 | 1.0 |

*Preparation of Diblock Polymer W*

A 2-liter reactor was charged with 1,336 g of α-methylstyrene which had been purified by passing through an activated alumina bed. The α-methylstyrene was deoxygenated at 30°C under a vacuum and active hydrogen compounds removed employing 3.4 ml of 0.5891 N sec-butyllithium in cyclohexane. Then 81.6 g of uninhibited oxygen-free styrene and 67 g of butadiene purified by passing through an ion exchange bed and activated alumina column were added. Hydrogen compounds were inactivated with 2.63 ml of 0.5891 N sec-butyllithium in cyclohexane. The resultant mixture was heated to 45°C and polymerization initiated by the addition of 3.17 ml of 0.5891 N sec-butyllithium in cyclohexane. After 75 minutes, polymerization appeared to have been completed. After the removal of 136 gram aliquot of the polymer solution which contained 15.43 weight percent polymer solids, 0.12 ml of isopropyl alcohol was added.

Additional polymerization was conducted after the addition of 72.6 g of purified styrene and 60 g of purified butadiene to the reactor inactivated by the addition of 0.70 ml of 0.5891 N sec-butyllithium in cyclohexane. Polymerization was initiated by the addition of 3.4 ml of 0.5891 N sec-butyllithium after the solution had reached 45°C. Polymerization appeared to be complete after 2 hours and 0.12 ml of isopropyl alcohol were added to terminate polymerization. An aliquot of 120 g of polymer solution was removed and contained 27.46 weight percent solids.

A third polymerization was conducted after addition of 54.5 g of purified styrene, 45 g of purified butadiene, and 0.61 ml of 0.5891 N sec-butyllithium. The mixture was heated to 45°C and polymerization initiated by the addition of 3.19 ml of 0.5891 N sec-butyllithium in cyclohexane. The reactor was maintained at 45°C for 85 minutes and then heated to 85°C. After 130 minutes, polymerization appeared to be complete and the reaction mixture was inactivated by the addition of 1 ml of isopropyl alcohol. The reaction mixture containing 36.0 weight percent solids was stabilized with 0.25 weight percent Irganox 1076, 2.0 weight percent of Ionol, and 1.0 weight percent of tris-nonylphenylphosphite. The polymer was recovered by devolatilizing in a vacuum oven at 180°C for 45 minutes after the polymer reached 170°C and the polymer ground into granules for further evaluation.

*Preparation of Diblock Polymer X*

Diblock Polymer X was prepared in a manner similar to that of Polymer W under conditions set forth in Table VIII. Typical properties are given in Table IX.

TABLE VIII

| | Polymer W | Polymer X |
|---|---|---|
| 1st Polymerization | | |
| Wt. α-MeS | 1336 g | 1390 g |
| Ml sec-butyllithium for impurities | 3.4[a] | 3.0[a] |
| Wt. styrene | 81.6 | 86 |
| Wt. butadiene | 67 | 71 |
| Ml sec-butyllithium for impurities | 2.63[a] | 1.02[a] |
| Ml sec-butyllithium for initiation | 3.17[a] | 3.17[a] |
| % solids | 15.43 | 15.58 |
| Wt. of polymer sample | 136 | 173 |
| 2nd Polymerization | | |
| Wt. styrene | 72.6 | 72.6 |
| Wt. butadiene | 60 | 60 |
| Wt. ml sec-butyllithium for impurities | 0.70[a] | 0.54[a] |
| Ml sec-butyllithium for initiation | 3.4[a] | 2.28[a] |
| % solids | 27.46 | 27.38 |
| Wt. of polymer sample | 120 | 112 |
| 3rd Polymerization | | |
| Wt. styrene | 54.5 | 54.5 |
| Wt. butadiene | 45 | 45 |
| Ml sec-butyllithium for impurities | 0.61[a] | 0.59[a] |
| Ml sec-butyllithium for initiation | 3.19[a] | 2.31[a] |
| % solids | 36.00 | 36.85 |

[a] 0.5891 N

TABLE IX

Diblock Polymer Description

| | Mol. Wt. | Melt Flow Rate Schedule G | % Butadiene | Ratio α-MeS/S |
|---|---|---|---|---|
| S | 159,000 | 0.03 | 35.0 | 46/54 |
| T | 77,000 | 10.1 | 37.0 | 46/54 |
| W | 105,000 | 9.3 | 32.1 | ~48/52 |
| X | 148,000 | 0.7 | 33.7 | ~48/52 |

Examples 1, 5 and 9

The copolymer and two triblocks were dissolved in methylene chloride at a concentration of approximately 30 percent by weight, the polymer solution was dried in a heated vacuum oven and ground up for injection molding. The final polymer contained 1 percent trisnonylphenyl phosphite, ~0.75 percent Ionol and 0.25 percent Irganox 1076.

Example 2

The experiment described in Example 1 was repeated using α-methylstyrene as a solvent with a polymer concentration of about 34 percent solids by weight. The polymer was dried, ground up and injection molded.

Example 3

The dried polymer from Example 1 was extruded on a twin screw extruder and then injection molded.

Example 4

The dried polymer from Example 2 was extruded on a twin screw extruder and then injection molded.

Examples 6, 7, 8, 10, 11 and 12

The procedure similar to that described in Example 1 was used except that the methylene chloride was replaced with toluene. The polymer concentration in toluene was about 35 percent solids by weight.

Example 13

All seven triblocks were used at a concentration of 6.45 percent each in the blend using toluene as described in Example 6.

Example 14

All seven triblocks were used at a concentration of 8.94 percent each in the blend using toluene as described in Example 6.

Examples 15 and 16

The triblock, Diene 55 and copolymer were dissolved in methylene chloride at a 25 percent concentration by weight. The methylene chloride was removed under vacuum in a heated oven and the dried polymer sample ground and evaluated. Characteristics of the polymer blends of Examples 1—16 are described in Table X.

TABLE X

Blends of α-methylstyrene/Styrene Copolymer with Two or More α-methylstyrene/Styrene-Butadiene-α-methylstyrene/Styrene Triblocks With Various Butadiene Compositions

| Reference | α-MeS/S Copolymer Type | Triblock Type | % Butadiene in Blend | Melt Flow Rate (Schedule I) | Properties of Blends (Injection Molded Data) | | | | | |
|---|---|---|---|---|---|---|---|---|---|---|
| | | | | | Vicat (°C) | Tensile Yield (MPa) | Tensile Rupture (MPa) | Elong. (%) | Tensile Modulus (MPa) | Izod (J/m Notch) |
| Example 1 | E | L—29.9[b] D—63.5[b] | 15 | 2.6 | 130 | 38.4 | 32.5 | 23 | 1860 | 32 |
| Example 2 | E | L—29.9[b] D—63.5[b] | 15 | 2.1 | 132 | 39.8 | 33.0 | 39 | 1790 | 48 |
| Example 3 | E | L—29.9[b] D—63.5[b] | 15 | 1.3 | 132 | 41.4 | 34.5 | 31 | 1860 | 37 |
| Example 4 | E | L—29.9[b] D—63.5[b] | 15 | 0.6 | 134 | 41.0 | 35.1 | 19 | 1790 | 75 |
| Example 5 | A + B[a] | L—29.9[b] D—63.5[b] | 20 | 0.9 | 126 | 31.2 | 27.2 | 48 | 2070 | 88 |
| Example 6 | C | L—29.9[b] D—63.5[b] | 20 | 8.0 | 121 | 33.8 | 22.9 | 31 | 2140 | 32 |
| Example 7 | C | L—29.9[f] D—63.5[f] | 20 | 7.6 | 125 | — | 36.7 | 2.0 | 2670 | 27 |

TABLE X Continued

| Reference | α-MeS/S Copolymer Type | Triblock Type | % Butadiene in Blend | Melt Flow Rate (Schedule I) | Properties of Blends (Injection Molded Data) | | | | | |
|---|---|---|---|---|---|---|---|---|---|---|
| | | | | | Vicat (°C) | Tensile Yield (MPa) | Tensile Rupture (MPa) | Elong. (%) | Tensile Modulus (MPa) | Izod (J/m Notch) |
| Example 8 | C | L—29.9[g]<br>D—63.5[g] | 20 | 7.6 | 121 | 28.7 | 20.3 | 23 | 2760 | 123 |
| Example 9 | A + B[a] | L—29.9[b]<br>D—63.5[b] | 25 | 1.0 | 121 | 22.9 | 21.5 | 44 | 1590 | 485 |
| Example 10 | C | L—29.9[b]<br>D—63.5[b] | 25 | 8.2 | 110 | 23.5 | 17.2 | 45 | 1650 | 340 |
| Example 11 | C | L—29.9[f]<br>D—63.5[f] | 25 | 8.0 | 118 | 27.9 | 17.3 | 31 | 1860 | 37 |
| Example 12 | C | L—29.9[g]<br>D—63.5[g] | 25 | 7.1 | 118 | 15.2 | 13.3 | 31 | 1380 | 640 |
| Example 13 | A | L+M+N+O[c]<br>D+P+Q[c] | 18 | 1.0 | 125 | 40.2 | 30.7 | 14 | 2280 | 37 |

TABLE X Continued

| Reference | α-MeS/S Copolymer Type | Triblock Type | % Butadiene[f] in Blend | Melt Flow Rate (Schedule I) | Properties of Blends (Injection Molded Data) Vicat (°C) | Tensile Yield (MPa) | Tensile Rupture (MPa) | Elong. (%) | Tensile Modulus (MPa) | Izod (J/m Notch) |
|---|---|---|---|---|---|---|---|---|---|---|
| Example 14 | C | L+M+N+O[c] D+P+Q[c] | 25 | 5.1 | 117 | 32.8 | 20.8 | 20 | 2280 | 32 |
| Example 15 | E | R—61.7 Diene-55[d] | 15 | — | 134[e] | — | — | — | — | — |
| Example 16 | E | D—63.5 Diene-55[d] | 15 | — | 134[e] | — | — | — | — | — |

[a] Ratio A/B = 3/1
[b] Equal quantities of triblocks
[c] Equal concentration of each triblock
[d] Polybutadiene from Phillips Petroleum Co.
[e] Data obtained from compression molded specimens
[f] Ratio L/D = 2/1
[g] Ratio L/D = 1/2

Examples 17—20

The copolymer and two triblocks were dissolved in methylene chloride at approximately 30 percent solids concentration by weight. The solvent was removed under vacuum in a heated oven and the samples compression molded and evaluated.

Example 21

The dried polymer blend from Example 19 was further melt blended in a twin screw extruder and evaluated by compression molding. Characteristics of the polymer of Examples 17—21 are described in Table XI.

TABLE XI

Blends of α-methylstyrene/Styrene Copolymer with Two or More α-methylstyrene/Styrene-Butadiene-α-methylstyrene/Styrene Triblocks

| Reference | α-MeS/S Copolymer Type | Triblock Type | % Butadiene in Blend | Melt Flow Rate (Schedule I) | Properties of Blends (Injection Molded Data) | | | | | |
|---|---|---|---|---|---|---|---|---|---|---|
| | | | | | Vicat (°C) | Tensile Yield (MPa) | Tensile Rupture (MPa) | Elong. (%) | Tensile Modulus (MPa) | Izod (J/m Notch) |
| Example 17 | E | L—29.9[a]<br>R—61.7[a] | 15 | 0.9 | 131 | — | 16.1 | 1.8 | 1030 | 187 |
| Example 18 | E | L—29.9[b]<br>R—61.7[b] | 15 | 0.7 | 132 | 14.2 | 13.2 | 1.7 | 900 | 117 |
| Example 19 | E | L—29.9[a]<br>D—63.5[a] | 15 | 2.0 | 129 | 10.9 | 11.0 | 1.6 | 830 | 182 |
| Example 20 | E | L—29.9[c]<br>D—63.5[c] | 15 | 2.3 | 131 | 12.7 | 13.8 | 1.8 | 900 | 144 |
| Example 21 | E | L—29.9[a]<br>D—63.5[a] | 15 | 1.3 | 133 | 30.2 | 26.8 | 5.0 | 1590 | 150 |

[a] Each triblock used in equal concentrations
[b] Ratio of L/R = ~1/2
[c] Ratio of L/D = ~1/2

Examples 22—37

These blends were made in toluene or methylene chloride as a solvent. After removing the solvent under vacuum in a heated oven, the dried blends were compression molded into 2.5 μm (10 mil) films. Characteristics of the polymer of Examples 22—37 are described in Table XII.

TABLE XII

| Reference | M—18 % | N—25.3 % | L—29.9 % | O—34.2 % | Q—50.5 % | P—58.1 % | D—63.5 % | % Copolymer | % Butadiene in Blend | Compression Molded Film 2.5 µm (10 mil) Toughness | Clarity |
|---|---|---|---|---|---|---|---|---|---|---|---|
| Example 22 | 25 | 25 | 25 | 25 | — | — | — | — | 26.9 | Very tough[a] | Very clear[b] |
| Example 23 | 33.3 | — | — | 33.3 | 33.3 | — | — | — | 34.2 | Very tough | clear[b] |
| Example 24 | — | — | — | — | 33.3 | 33.3 | 33.3 | — | 57.4 | Very elastic flexible | Clear |
| Example 25 | — | — | 50 | — | — | — | 50 | — | 46.7 | Very tough some stiffness | Clear |
| Example 26 | 14.3 | 14.3 | 14.3 | 14.3 | 14.3 | 14.3 | 14.3 | — | 39.9 | Very tough some stiffness | Clear |
| Example 27 | 7.5 | 15 | 22.5 | 30.0 | — | — | — | 25.0 A | 22.1 | Some toughness | Very clear |
| Example 28 | 7.25 | 7.25 | 21.75 | 36.25 | — | — | — | 27.5 A | 22.0 | Tough | Very clear |

TABLE XII Continued

| Reference | M—18 % | N—25.3 % | L—29.9 % | O—34.2 % | Q—50.5 % | P—58.1 % | D—63.5 % | % Copolymer | % Butadiene in Blend | Compression Molded Film 2.5 µm (10 mil) Toughness | Clarity |
|---|---|---|---|---|---|---|---|---|---|---|---|
| Example 29 | 16.7 | 16.7 | 16.7 | 16.7 | — | — | — | 33.3 A | 18.0 | Some toughness | Very clear |
| Example 30 | 20 | — | — | 20 | 20 | — | — | 40.0 C | 20.0 | Very tough | Clear |
| Example 31 | 6.45 | 6.45 | 6.45 | 6.45 | 6.45 | 6.45 | 6.45 | 54.8 A | 18.0 | Very tough | Semi-Clear[c] |
| Example 32 | — | — | — | 26 | 26 | — | — | 48.0 C | 22.0 | Very tough | Semi-Clear[c] |
| Example 33 | 32 | — | — | — | 32 | — | — | 36.0 C | 22.0 | Very tough | Semi-Clear[c] |
| Example 34 | — | — | 26.8 | — | — | — | 26.8 | 46.4 C | 25.0 | Very tough | Semi-Clear to hazy |
| Example 35 | — | — | — | — | 10.5 | 10.5 | 10.5 | 68.5 C | 18.1 | Very tough | Very hazy[d] |

TABLE XII Continued

| Reference | M—18 % | N—25.3 % | L—29.9 % | O—34.2 % | Q—50.5 % | P—58.1 % | D—63.5 % | % Copolymer | % Butadiene in Blend | Compression Molded Film 2.5 μm (10 mil) Toughness | Compression Molded Film 2.5 μm (10 mil) Clarity |
|---|---|---|---|---|---|---|---|---|---|---|---|
| Example 36 | — | — | — | — | 40 | — | — | 60.0 C | 20.0 | Very tough | Very hazy |
| Example 37 | — | — | — | — | — | — | 31.5 | 68.5 C | 20.0 | Very tough | Very hazy |

[a] Very tough: very tough if a 2.5 μm (10 mil) film can be bent 180° without breaking
[b] Clear and Very clear: refers to clarity which is similar to or better than that obtained for a blend of KRO3 Resin and polystyrene (50/50 ratio) clarity of about 0.10 absorbance or less as measured on a 2.5 μm (10 mil) film using a 640 nanometer light source
[c] Semi-clear: refers to a clarity which is less than that of a KRO3/Polystyrene blend
[d] Very hazy: Opaqueness similar to that of Impact Polystyrene

Examples 38—48

The blends as described in Table XIII were prepared by dissolving the polymers at about 20 weight percent in methylene chloride along with the appropriate stabilizers. The polymer solution was devolatilized in a heated vacuum oven. The final polymers contained approximately 1 percent trisnonylphenyl phosphite, 0.25 percent Irganox 1076 and 0.5 percent Ionol. Characteristics of the polymer of Examples 38—48 are described in Table XIII.

TABLE XIII

Blends of α-methylstyrene/Styrene Copolymer, α-methylstyrene/Styrene-butadiene Diblocks α-methylstyrene/Styrene-Butadiene-α-methylstyrene/Styrene Triblocks

| Reference | α-MeS/S Copolymer Type | Diblock Type [a] | Triblock Type | % Butadiene in Blend | Film Clarity (2.5 µm; 10 mil) | Melt Flow Rate (Schedule I) | Properties of Blends (Compression Molded Data) | | | | | |
|---|---|---|---|---|---|---|---|---|---|---|---|---|
| | | | | | | | Vicat (°C) | Tensile Yield (MPa) | Tensile Rupture (MPa) | Elong. (%) | Tensile Modulus (MPa) | Izod (J/m Notch) |
| Example 38 | — | S—35 | O—34.2 | 34.5 | V. Clear | 0.21 | 112 | 16.5 | 15.4 | 2.6 | 900 | 91 |
| Example 39 | — | T—37 | O—34.2 | 35.5 | V. Clear | 2.8 | 108 | 11.2 | 10.5 | 1.7 | 760 | 277 |
| Example 40 | — | S—35 | V—23 | 29.0 | V. Clear | 0.40 | 117 | 23.3 | 22.6 | 2.0 | 1380 | 27 |
| Example 41 | — | T—37 | V—23 | 30.0 | V. Clear | 8.8 | 113 | — | 13.7 | 1.1 | 1450 | 21 |
| Example 42 | E | T—37 | O—34.2 | 23.6 | Some haze | 2.6 | 124 | — | 15.0 | 1.2 | 1520 | 69 |
| Example 43 | U | T—37 | O—34.2 | 23.6 | V. Clear | 3.0 | 130 | — | 20.3 | 1.5 | 1650 | 27 |
| Example 44 | U | T—37 | — | 23.7 | Clear | 3.5 | 127 | — | — | — | — | — |
| Example 45 | U | T—37 | — | 18.5 | Clear | 6.4 | 131 | — | — | — | — | — |
| Example 46 | E | T—37 | — | 24.7 | Hazy | — | — | — | — | — | — | — |
| Example 47 | E | W—32.1 | — | 24.1 | Clear | 5.5 | 125 | — | — | — | — | 21 |
| Example 48 | E | X—33.7 | — | 24.0 | Hazy | 0.7 | 127 | — | — | — | — | — |

[a] Ratio of Diblock/triblock = 1/1

**Claims**

1. A polymer blend having improved impact resistance and light transmission consisting of:

(a) 5 to 95 parts by weight of a polymer containing polymerized therein at least 95 weight percent of one or more alkenyl aromatic monomers of the formula:

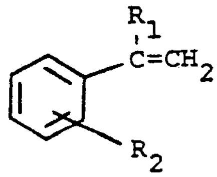

Formula I

wherein each $R_1$ and $R_2$ is independently hydrogen or methyl, and up to 5 weight percent of another monomer polymerizable therewith, and

(b) 95 to 5 parts by weight of a blend of at least 2 block copolymers of the configuration $AB(BA)_n$ wherein n is an integer from 1 to 5, A is a polymer of an alkenyl aromatic monomer of Formula I, B is a block polymer of one or more conjugated dienes, said blend being a mixture of at least 2 such block copolymers and including at least one block copolymer containing less than 40 weight percent of diene monomer polymerized therein and at least one block copolymer containing greater than 50 weight percent of the diene monomer polymerized therein with the limitation that the weight ratio of the low diene block copolymer to the high diene block copolymer is 1:2 to 4:1 and the total diene content of the polymer blend is 5 to 35 weight percent.

2. The polymer blend of Claim 1 wherein (a) is a polymer of 5 to 95 parts by weight styrene and 95 to 5 parts by weight α-methylstyrene.

3. The polymer blend of Claim 1 wherein the mole ratio of styrene to α-methylstyrene in (a) is greater than 1:2.5.

4. The polymer blend of Claim 1 wherein polymer (a) has a molecular weight of 25,000 to 400,000.

5. The polymer blend of Claim 1 wherein the polymerized diene in the block copolymers is butadiene, isoprene, or mixtures thereof.

6. The polymer blend of Claim 1 wherein the polymers are prepared employing an organolithium initiator.

7. The polymer blend of Claim 1 wherein the block copolymer (b) has a molecular weight of 40,000 to 800,000.

8. The polymer blend of Claim 1 wherein the diene blocks are present in domains having average diameters of 0.1 to 5 micrometers.

9. The polymer blend of Claim 1 wherein the blend is formed by the melt admixture of at least 2 block copolymers with (a).

10. The polymer blend of Claim 1 containing at least 3 diverse block polymers prepared by sequential polymerization.

**Patentansprüche**

1. Polymerischung mit verbesserter Schlagzähigkeit und Lichtdurchläßigkeit bestehend aus

(a) 5—95 Gew.Tl. eines Polymers enthaltend in polymerisierter Form mindestens 95 Gew.% eines oder mehrerer alkenylaromatischen Monomeren der Formel

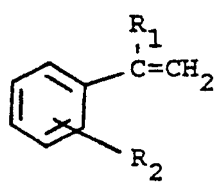

Formel I

in der jedes $R_1$ und $R_2$ unabhängig voneinander Wasserstoff oder Methyl ist und bis zu 5 Gew.% eines anderen damit polymerisierbaren Monomeren, und

(b) 95—5 Gew.Tl. einer Mischung von mindestens zwei Blockcopolymeren der Konfiguration $AB(BA)_n$, in der n eine ganze Zahl von 1—5 ist, A ist ein Polymer eines alkenylaromatischen Monomers der Formel I, B ist ein Blockpolymer aus einem oder mehreren Dienen, wobei diese Mischung eine Mischung aus mindestens zwei dieser Blockcopolymeren ist, und mindestens ein Blockcopolymer weniger als 40 Gew.% einpolymerisiertes Dienmonomer enthält und mindestens ein Blockcopolymer mehr als 50 Gew.% einpolymerisiertes Dienmonomer enthält, mit der Einschränkung, daß das Gewichtsverhältnis des Blockcopolymeren mit niedrigem Diengehalt zu Blockcopolymeren mit dem hohen Diengehalt 1:2 bis 4:1 beträgt und der Gesamtdiengehalt der Polymermischung 5—35 Gew.% beträgt.

2. Polymermischung nach Anspruch 1, dadurch gekennzeichnet, daß (a) ein Polymer aus 5—95 Gew.Tl.

Polystyrol und 95—5 Gew.Tl. α-Methylstyrol ist.

3. Polymermischung nach Anspruch 1, dadurch gekennzeichnet, daß das Molverhältnis von Styrol zu α-Methylstyrol in (a) größer als 1:2,5 ist.

4. Polymermischung nach Anspruch 1, dadurch gekennzeichnet, daß das Polymer in (a) ein Molekulargewicht von 25 000 bis 400 000 aufweist.

5. Polymermischung nach Anspruch 1, dadurch gekennzeichnet, daß das Dien in den Blockcopolymeren Butadien, Isopren oder eine Mischung derselben ist.

6. Polymermischung nach Anspruch 1, dadurch gekennzeichnet, daß die Polymeren unter Verwendung eines Organolithiumstarters hergestellt sind.

7. Polymermischung nach Anspruch 1, dadurch gekennzeichnet, daß das Blockcopolymer (b) ein Molekulargewicht von 40 000 bis 800 000 aufweist.

8. Polymermischung nach Anspruch 1, dadurch gekennzeichnet, daß die Dienblöcke in Form von Bereichen mit einem mittleren Durchmesser von 0,1 bis 5 µm anwesend sind.

9. Polymermischung nach Anspruch 1, dadurch gekennzeichnet, daß die Mischung durch Schmelzmischen von mindestens zwei Blockcopolymeren mit (a) gebildet ist.

10. Polymermischung nach Anspruch 1, enthaltend mindestens drei abwechselnde Blockpolymere hergestellt durch serielle Polymerisation.

**Revendications**

1. Mélange de polymères ayant une résistance aux chocs et une transmission de la lumière améliorées, constitué de:

(a) 5 à 95 parties en poids d'un polymère contenant, à l'état polymèrisé, au moins 95% en poids d'un ou de plusieurs monomères alcényl-aromatiques, répondant à la formule:

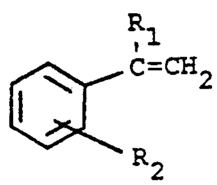

Formule I

dans lequel $R_1$ et $R_2$ représentent chacun indépendamment un atome d'hydrogène ou un groupe méthyle, et jusqu'à 5% en poids d'un autre monomère polymèrisable avec les précédents, et

(b) 95 à 5 parties en poids d'un mélange d'au moins 2 copolymères séquencés ayant la configuration $AB(BA)_n$ dans laquelle n est un nombre entier de 1 à 5, A est un polymère d'un monomère alcényl-aromatique de formule I, B est un polymère séquencé formé d'un ou de plusieurs diènes conjugués, ledit mélange étant un mélange d'au moins 2 copolymères séquencés de ce type, et comprenant au moins un copolymère séquencé contenant moins de 40% en poids de diène monomère polymèrisé, et au moins un copolymère séquencé contenant plus de 50% en poids de diène monomère polymèrisé, avec cette condition que le rapport pondéral du copolymère séquencé à faible teneur en diène au copolymère séquencé à teneur élevée en diène soit de 1:2 à 4:1, et que la teneur totale en diène du mélange de polymères soit de 5 à 35% en poids.

2. Mélange de polymères selon la revendication 1, dans lequel (a) est un polymère contenant de 5 à 95% en poids de styrène et de 95 à 5 parties en poids d'α-méthylstyrène.

3. Mélange de polymères selon la revendication 1, dans lequel le rapport molaire du styrène à l'α-méthylstyrène dans (a) est supérieur à 1:2.5.

4. Mélange de polymères selon la revendication 1, dans lequel le polymère (a) présente une masse moléculaire de 25 000 à 400 000.

5. Mélange de polymères selon la revendication 1, dans lequel le diène polymèrisé dans les copolymères séquencés est le butadiène, l'isoprène, ou leurs mélanges.

6. Mélange de polymères selon la revendication 1, dans lequel les polymères sont préparés à l'aide d'un amorceur organolithien.

7. Mélange de polymères selon la revendication 1, dans lequel le copolymère séquencé (b) présente une masse moléculaire de 40 000 à 800 000.

8. Mélange de polymères selon la revendication 1, dans lequel les séquences de diènes sont présentes en domaines ayant des diamètres moyens de 0,1 à 5 micromètres.

9. Mélange de polymères selon la revendication 1, dans lequel le mélange est formé par le mélange à l'état fondu d'au moins 2 copolymères séquencés avec (a).

10. Mélange de polymères selon la revendication 1, contenant au moins 3 divers polymères séquencés préparés par polymèrisation séquentielle.